# FASCICULE DE BREVET EUROPEEN

(11) **EP 1 947 380 B1**
(45) Date de publication et mention de la délivrance du brevet: **02.09.2009**
(21) Numéro de dépôt: 08100235.4
(22) Date de dépôt: 09.01.2008
(51) Int. Cl.: F21S 8/10, F21V 7/00, F21W 101/10

(54) **Module optique multifonction de véhicule automobile**
Optisches Multifunktionsmodul für Kraftfahrzeug
Multi-functional optical module for an automobile

(30) Priorité: 22.01.2007 FR 0700428
(43) Date de publication de la demande: 23.07.2008
(73) Titulaire: VALEO VISION, 93012 Bobigny (FR)
(72) Inventeur: Pauty, Etienne, 75019 Paris (FR); Bos, Patrice, 93500 Pantin (FR); Muller, Jean-Claude, 93600 Aulnay sous Bois (FR)

(56) Documents cités:
- EP-A- 1 538 392
- EP-A1- 1 382 900
- DE-A1- 19 616 037
- DE-A1- 19 718 335
- US-A- 5 008 781

## Description

L'invention se rapporte à un module optique, notamment un module qui est susceptible d'émettre un premier faisceau lumineux du type code et un deuxième faisceau lumineux d'un deuxième type.

L'invention se rapporte plus particulièrement à un module optique pour un projecteur de véhicule automobile qui est susceptible d'émettre vers l'avant selon la direction globale d'un axe optique longitudinal au moins un premier faisceau lumineux à coupure à bord oblique de type code et un deuxième faisceau lumineux différent, le module optique comportant :
- un réflecteur comportant au moins une première zone dite zone de code et au moins une deuxième zone complémentaire, la première zone de code comportant au moins une portion dite « de coupure oblique » car destinée à créer le bord oblique de la coupure ;
- une première source lumineuse de code qui est susceptible d'émettre des rayons lumineux qui une fois réfléchis par la première zone de code du réflecteur forment le premier faisceau lumineux à coupure de type code ;
- et une deuxième source lumineuse qui est susceptible d'émettre des rayons lumineux qui une fois réfléchis par la première zone de code et par la deuxième zone complémentaire du réflecteur forment le deuxième faisceau lumineux.

On connaît déjà des modules optiques de ce type qui sont susceptibles d'émettre au choix un premier faisceau lumineux de croisement, aussi appelé code, et un faisceau lumineux de route, aussi appelé "pleins phares", sans coupure. Un tel module est connu de DE 19718335.

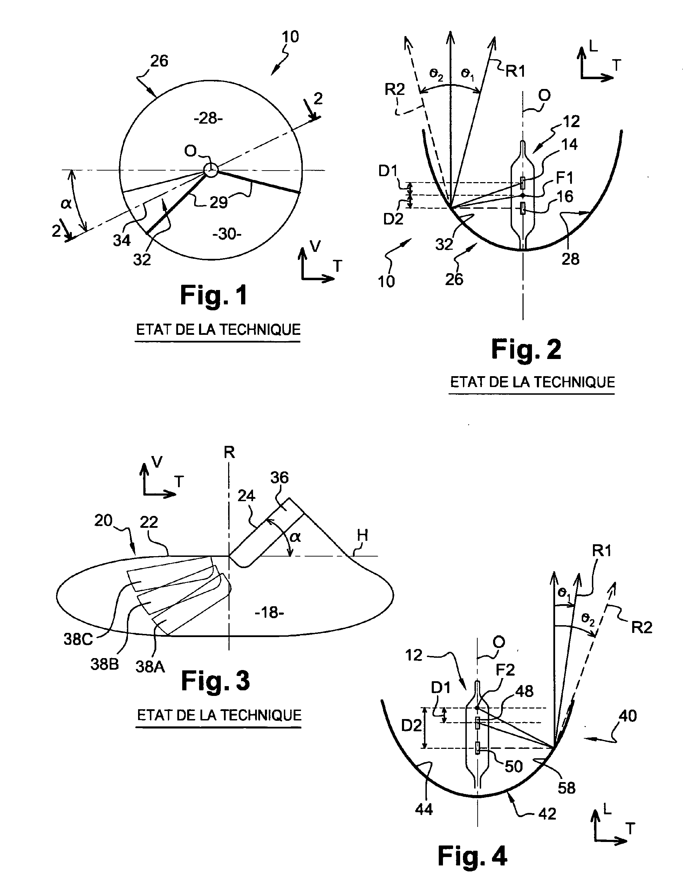

Pour décrire un tel module optique réalisé selon l'état de la technique, on se réfère aux figures 1 à 3.

Pour la suite de la description, on définit de manière non limitative une orientation transversale qui est dirigée depuis un côté de croisement de la route vers le bas-côté opposé de la route. De manière conventionnelle, le côté de croisement correspond au coté conducteur du véhicule et le bas-côté correspond au côté passager du véhicule. De manière non limitative, le côté de croisement est représenté à gauche et le bas-côté est représenté à droite aux figures 1 à 6.

On définit aussi une orientation verticale et une orientation longitudinale. Les orientations longitudinale, verticale et transversale sont indiquées aux figures par le trièdre "L,V,T".

On a représenté aux figures 1 et 2 un module optique 10 réalisé selon l'état de la technique.

Comme illustré à la figure 2, un tel module optique 10 est habituellement équipé d'une lampe 12 normalisée dite "bi-filaments" de type "H4", ou "H15". La lampe 12 comporte deux filaments qui sont susceptibles d'être allumés indépendamment l'un de l'autre. Le premier filament forme une première source lumineuse 14, et le deuxième filament qui est agencé longitudinalement vers l'arrière par rapport au premier filament, forme une deuxième source lumineuse 16. Ces filaments sont agencés sensiblement sur l'axe optique "O" longitudinal du module optique 10. Plus particulièrement, la deuxième source lumineuse 16 est légèrement décalée verticalement, par exemple vers le haut, par rapport à la première source lumineuse 14.

Chaque source lumineuse 14, 16 est associée respectivement à un premier faisceau lumineux de code 18 et au deuxième faisceau lumineux.

Comme représenté à la figure 3, le premier faisceau de code 18 est délimité vers le haut par une coupure 20 transversale, dite coupure européenne à profil en V aplati, présentant du côté du croisement des autres véhicules un bord transversal horizontal 22, et de l'autre côté un bord oblique 24 montant suivant un angle déterminé "α" de 15° par rapport à l'horizontale en direction du bas-côté de la route.

Le bord horizontal 22 de la coupure 20 est agencé sur une ligne transversale horizontale "H" qui servira de ligne de référence pour la suite de la description.

Le bord oblique 24 est agencé à droite d'un plan vertical axial qui passe par l'axe longitudinal "R" de la route, tandis que le bord horizontal 22 est agencé à gauche dudit plan axial vertical.

Le deuxième faisceau lumineux est un faisceau de route (non représenté), qui ne comporte pas de coupure.

Comme représenté à la figure 1, le module optique 10 comporte un réflecteur 26 réalisé selon l'état de la technique. Le réflecteur 26 comporte une première zone 28 supérieure qui est destinée à former le faisceau de code 18 par réflexion des rayons lumineux "R1", dont un seul est représenté, émis par la première source lumineuse 14. Cette première zone 28 du réflecteur sera appelée dans la suite de la description "zone de code" et la première source lumineuse 14 sera appelée "source lumineuse de code".

Le réflecteur 26 comporte aussi une deuxième zone 30 inférieure qui est destinée à former en association avec la zone de code 28, le deuxième faisceau lumineux de route par réflexion des rayons lumineux "R2", dont un seul est représenté, émis par la deuxième source lumineuse 16. La deuxième zone 30 du réflecteur sera appelée par la suite "zone complémentaire ", et la deuxième source lumineuse 16 sera appelée "source lumineuse de route".

La zone de code 28 et la zone complémentaire 30 sont délimitées par deux bords mitoyens 29 qui rayonnent depuis l'axe optique "O" qui sont représentés en traits gras à la figure 1.

Une coupelle (non représentée) est agencée sous la source lumineuse de code 14 pour que les rayons lumineux émis par la source lumineuse de code 14 n'atteignent essentiellement que la zone de code 28 du réflecteur 26.

La coupure 20 du faisceau de code 18 est réalisée en conformant la zone de code 28 en une surface complexe. Plus particulièrement, la zone de code 28 est discrétisée en plusieurs surfaces unitaires dont la génératrice verticale est sensiblement parabolique.

Notamment, le bord oblique 24 de la coupure 20 est réalisé par une ou plusieurs surfaces élémentaires de la zone de code 28 qui forment un secteur angulaire 32 qui comporte une partie médiane 34 qui rayonne avec un angle égal à l'angle "α" du bord oblique 24 depuis l'axe optique "O" du réflecteur 26 vers le bas par rapport à une direction horizontale. La partie médiane 34 présente une section axiale qui présente sensiblement la forme d'une parabole de foyer "F1".

Ce secteur 32 sera appelé par la suite, "portion de coupure oblique". La portion de coupure oblique 32 est plus particulièrement agencée du coté opposé à celui du bord oblique 24 de la coupure 20 par rapport à un plan vertical axial passant par l'axe "R" de la route, c'est-à-dire que la portion de coupure oblique 32 est agencée du côté de croisement dans la zone de code 28. (Il est possible qu'il y ait plusieurs portions de réflecteur responsables globalement de la création de la coupure oblique).

Comme représenté à la figure 2, la portion de coupure oblique 32 comporte un ou plusieurs foyers optiques "F1" associés qui sont agencés en arrière de la source lumineuse de code 14 de manière que les rayons lumineux "R1" soient réfléchis de façon convergente par la portion de coupure oblique 32. Plus particulièrement, les rayons lumineux "R1" ainsi réfléchis forment un angle "θ1" avec la direction de l'axe optique "O" de manière à être dirigés vers le bas-côté en croisant l'axe optique "O".

Ainsi, les images 36 de la source lumineuse de code 14, dont seulement une est représentée pour des raisons de clarté, projetées par la portion de coupure oblique 32 est orientée à 15° et située du côté opposé par rapport à la zone 32, en montant vers le bas-côté de la route comme représenté à la figure 3, le bord supérieur oblique des images 36 formant ainsi le bord oblique 24 de la coupure 20.

Par ailleurs, on observe une évolution des exigences en matière de signalisation des véhicules automobiles, notamment le règlement sur les feux diurnes de la Communauté Européenne intitulé "ECE regulation R87: Daytime Running Lamp" généralement désigné par l'abréviation DRL, feux qu'il faut parvenir à réaliser de façon appropriée.

Une première solution admise pour assurer cette fonction DRL ou "feux diurnes" consiste à allumer en permanence les feux de croisement (codes), comme les pays scandinaves le pratiquent actuellement. Toutefois, en procédant de la sorte, on augmente la consommation d'énergie de façon non négligeable, et on réduit la durée de vie des lampes. La photométrie du feu de croisement, tolérée pour cette fonction, n'est cependant pas la photométrie spécifique de la fonction de feux diurnes.

La photométrie de la fonction de feux diurnes est relativement différente de celle des autres fonctions d'éclairage assurées par les modules optiques de projecteur de véhicule automobile. En particulier, le faisceau de feux diurnes doit être relativement épais suivant l'axe optique, avec une intensité lumineuse très faible en regard des feux de route ou de croisement. Cela en fait une fonction de signalisation qui est faite pour que le véhicule soit vu, à la différence des fonctions d'éclairage qui sont faites pour permettre au conducteur du véhicule de voir la route.

Il est possible de prévoir un feu diurne spécifique, mais dans ce cas il faut ajouter à l'avant du véhicule, notamment dans le bouclier, une cavité respectant le règlement R87. Actuellement, la surface éclairante exigée pour la fonction de feux diurnes est de 40 cm² et il n'est pas toujours aisé dans les véhicules modernes de trouver un emplacement pour une telle surface éclairante.

Ces diverses exigences pour la fonction de feux diurnes apparaissent donc difficiles à concilier avec une autre fonction classique d'un module optique de projecteur de véhicule automobile.

Lorsque l'on veut combiner la fonction faisceau de code et une fonction de signalisation telle que le faisceau de feux diurnes dans un même module optique 10 comme expliqué précédemment en remplaçant le faisceau de route par un faisceau de feux diurnes, le faisceau lumineux formé par la zone de code au moyen de la deuxième source lumineuse comporte des points éclairés trop intensément, appelés aussi points chauds, qui ne permettent pas de réaliser un faisceau de signalisation restant dans les normes.

En effet, comme représenté à la figure 2, les foyers optiques "F1" de la portion de coupure oblique 32 du réflecteur 26 est agencé entre les deux sources lumineuses 14, 16, et donc en avant de la deuxième source lumineuse 16. La distance "D1" entre les foyers optiques "F1" et la première source de code 14 est sensiblement égale à la distance "D2" entre les foyers optiques "F1" et la deuxième source de route 16.

Les rayons lumineux "R2" émis par la deuxième source lumineuse 16 et réfléchis par la portion de coupure oblique 32 forment un angle "θ2" avec l'axe optique "O" du faisceau lumineux de manière divergente, c'est-à-dire qu'ils ne croisent pas l'axe optique "O". L'angle "θ2" est faible, par exemple l'angle "θ2" est sensiblement égal à l'angle "θ1".

Comme représenté à la figure 3, les images 38A, 38B et 38C, dont trois sont représentées à titre non limitatif, de la deuxième source lumineuse 16 par la portion de coupure oblique 32 sont projetées à proximité de l'axe "R" de la route, et elles sont très resserrées les unes par rapport aux autres. Ainsi, la superposition des images 38 produit une tâche lumineuse de forte intensité qui est agencée à proximité de l'axe "R" de la route, du côté de croisement des autres véhicules. Cette forte intensité entraîne un non respect de la réglementation DRL.

Pour résoudre notamment ce problème, l'invention propose un module optique du type décrit précédemment, tel que :
- le faisceau lumineux du deuxième type soit un faisceau lumineux de signalisation (notamment en conformant de façon appropriée les portions de réflecteur et la source ad hoc);
- la portion dite « de coupure oblique » (ou au moins une des portions, s'il y a plusieurs portions de réflecteur dédiées pour faire la portion oblique de la coupure d'un faisceau à coupure de type code) à de la zone de code est agencée du même côté que le bord oblique de la coupure par rapport à un plan axial vertical.

On n'a donc pas d'inversion d'image dans l'invention en ce qui concerne la portion oblique de la coupure.

Selon d'autres caractéristiques de l'invention :
- la portion de coupure oblique de la première zone de code comporte une partie médiane qui fait un angle identique à celui du bord oblique par rapport à une ligne transversale ;
- la zone de code comprend des portions adaptées aussi pour éclairer des points/zones spécifiques au deuxième faisceau lumineux de signalisation : (cette zone peut être découpée en segments dont certains participent toujours au faisceau code, mais ont été modifiés afin de mieux s'adapter à la photométrie du faisceau de feu diurne).
- la première source lumineuse de code comporte une coupelle, notamment inférieure, qui est agencée de manière à ce que les rayons lumineux émis par la première source lumineuse de code n'atteignent essentiellement que la zone de code du réflecteur ; (Cette coupelle est donc un occulteur, qui arrête les rayons, qui, sinon, iraient frapper le reste du réflecteur).
- le deuxième faisceau lumineux est un faisceau lumineux diurne ;
- le module optique comporte une troisième source lumineuse qui est agencée dans la zone complémentaire et qui est susceptible d'émettre des rayons lumineux qui, une fois réfléchis par la zone de code et par la zone complémentaire, forment un troisième faisceau lumineux d'éclairage. Ce troisième faisceau est de préférence un faisceau d'éclairage sans coupure, notamment un faisceau route.
- la deuxième source lumineuse est décalée sensiblement, au moins longitudinalement vers l'arrière, par rapport à la première source lumineuse.

L'invention propose aussi un projecteur de véhicule automobile comportant le module optique réalisé selon les enseignements de l'invention, et le véhicule intégrant un tel projecteur.

D'autres caractéristiques et avantages apparaîtront lors de la lecture de la description détaillée qui va suivre pour la compréhension de laquelle on se reportera aux dessins annexés parmi lesquels :
- la figure 1 est une vue arrière qui représente un module optique réalisé selon l'état de la technique ;
- la figure 2 est une vue en coupe axiale selon le plan de coupe 2-2 de la figure 1 qui représente le module optique réalisé selon l'état de la technique ;
- la figure 3 est une vue de face qui représente un plan vertical transversal éclairé par le faisceau lumineux de code émis par le module optique selon l'état de la technique des figures 1 et 2;
- la figure 4 est une vue en coupe axiale selon le plan de coupe 4-4 de la figure 6 qui représente un module optique réalisé selon les enseignements de l'invention ;
- la figure 5 est une vue de face qui représente un plan vertical transversal éclairé par le faisceau lumineux de code émis par le module optique selon l'invention de la figure 4 ;
- la figure 6 est une vue arrière qui représente le module optique selon l'invention de la figure 5 ;
- la figure 7 est une vue en coupe axiale verticale du module optique selon l'invention de la figure 6.

Pour la suite de la description, des éléments identiques, analogues ou similaires seront indiqués par des mêmes numéros de référence.

On a représenté à la figure 4 un module optique 40 réalisé selon les enseignements de l'invention. Il s'agit d'un module optique 40 pour un projecteur de véhicule automobile qui est susceptible d'émettre au moins (au moins) un premier faisceau lumineux 18 à coupure 20 à bord oblique 24 de type code, et au moins un deuxième faisceaux lumineux d'un deuxième type, vers l'avant selon la direction globale d'un axe optique longitudinal "O".

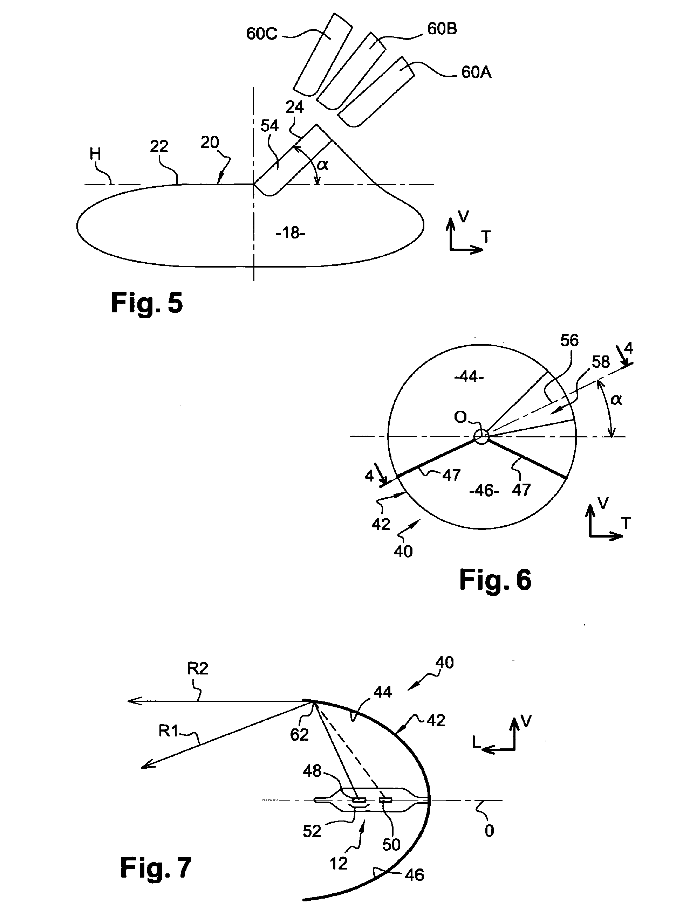

Il s'agit plus particulièrement d'un module optique 40 qui est susceptible d'émettre un premier faisceau lumineux de code 18, comme illustré à la figure 5, aussi appelé faisceau lumineux de croisement, et un deuxième faisceau lumineux de signalisation. Le deuxième faisceau lumineux est ici plus particulièrement un faisceau de feux diurnes.

Comme décrit précédemment et comme représenté à la figure 5, le premier faisceau lumineux de code 18 est délimité vers le haut par une coupure 20 à profil en "V" comportant un bord horizontal 22 et un bord oblique 24. Le bord oblique 24 est agencé à droite d'un plan vertical axial qui passe par l'axe longitudinal "R" de la route, tandis que le bord horizontal 22 est agencé à gauche dudit plan axial vertical.

Le faisceau de code 18 comporte ainsi une portion dissymétrique appartenant à la partie de la zone 42 qui éclaire au-dessus de la ligne transversale horizontale de référence "H" et qui est délimitée vers le haut par le bord oblique 24 de la coupure formant l'angle déterminé "α" de 15° avec la ligne transversale horizontale de référence "H".

Le module optique 40 comporte un réflecteur 42 qui est formé par un ensemble de secteurs conçus à partir d'une génératrice horizontale et d'une génératrice verticale, cette dernière présentant une forme sensiblement parabolique.

Comme représenté à la figure 6, le réflecteur 42 comporte plus particulièrement au moins une première zone supérieure de code 44 et au moins une deuxième zone inférieure complémentaire 46.

La première zone de code 44 et la deuxième zone complémentaire 46 sont délimitées par deux bords mitoyens 47 qui rayonnent depuis l'axe optique "O" qui sont représentés en traits gras à la figure 6.

Comme représenté à la figure 4, le module optique 40 comporte aussi une première source lumineuse 48 avant qui est agencée sensiblement sur l'axe optique "O" du réflecteur 42.

La première source lumineuse 48 est susceptible d'émettre des rayons lumineux "R1", dont seulement un rayon a été représenté pour des raisons de clarté des figures, qui une fois réfléchis par la première zone de code 44 du réflecteur 42, forment le premier faisceau lumineux de code 18 à coupure 20. Pour la suite de la description, la première source lumineuse sera donc appelée "source lumineuse de code" 48.

Le module optique 40 comporte aussi une deuxième source lumineuse 50 arrière qui est agencée sensiblement sur l'axe optique "O" du réflecteur 42, longitudinalement en arrière de la première source lumineuse de code 48. Plus particulièrement, la deuxième source lumineuse 16 est légèrement décalée verticalement, par exemple vers le haut, par rapport à la première source lumineuse 14, comme représenté à la figure 7.

La deuxième source lumineuse 50 est susceptible d'émettre des rayons lumineux "R2", dont un seul est représenté pour des raisons de clarté des figures, qui une fois réfléchis par la première zone de code 44 et par la deuxième zone complémentaire 46 du réflecteur 42, forment le deuxième faisceau lumineux de feux diurnes (non représenté). La deuxième source lumineuse 50 sera donc appelée par la suite "deuxième source lumineuse de signalisation" 50.

Les première 48 et deuxième 50 sources lumineuses sont formées respectivement par le premier et le deuxième filament d'une unique lampe bi-filaments du type "H4" ou "H15". Chaque source lumineuse 48, 50 présente ainsi une forme d'un cylindre allongé selon son axe et sensiblement coaxial à l'axe optique "O" du module optique 40.

Ainsi, l'image de chaque source lumineuse 48, 50 projetée par une surface élémentaire du réflecteur 42 forme sensiblement un trapèze dont l'orientation autour de l'axe optique "O" dépend de la position angulaire de ladite surface élémentaire autour de l'axe optique "O". Par exemple, l'image de la source lumineuse 48, 50 par une surface élémentaire agencée à angle droit par rapport à une direction verticale autour de l'axe optique "O" formera sensiblement un rectangle couché dont les grands côtés font un angle droit par rapport à la direction verticale.

Comme représenté à la figure 7, la première source lumineuse de code 48 comporte une coupelle 52 inférieure qui est agencée de manière à intercepter les rayons lumineux "R1" qui sont émis en direction de la deuxième zone complémentaire 46 du réflecteur 42. Les rayons lumineux "R1" émis par la source lumineuse de code 48 n'atteignent ainsi essentiellement que la zone de code 44 du réflecteur 42.

Selon les enseignements de l'invention, le bord oblique 24 de la coupure 20 et une partie de la portion dissymétrique 42 du faisceau lumineux de code 18 qui éclaire au-dessus de la ligne horizontale de référence "H" sont formés par la projection d'au moins une image 54, ou de plusieurs images superposées, de la première source lumineuse de code 48 par une première portion 56 dite de coupure oblique de la première zone de code 44 du réflecteur 42.

La portion de coupure oblique 56 est ainsi susceptible de créer le bord oblique 24 de la coupure 20.

Plus particulièrement, comme représenté à la figure 6, la première portion de coupure oblique 56 forme un secteur angulaire de la zone de code 44 du réflecteur 42 qui est centré sur l'axe optique "O".

La portion de coupure oblique 56 de la première zone de code 44 du réflecteur 42 est agencée du même côté, c'est-à-dire à droite, que le bord oblique 24 par rapport à un plan axial vertical passant par l'axe "R" de la route. La portion de coupure oblique 56 est plus particulièrement agencée dans le cadrant supérieur du côté du bas-côté du réflecteur 42.

La portion de coupure oblique 56 comporte une partie médiane 58 qui rayonne en montant depuis l'axe optique "O" du réflecteur 42 avec un angle de 15° identique à celui du bord oblique 24 de la coupure 20 par rapport à la ligne horizontale "H".

Ainsi, les images 54 de la première source lumineuse de code 48 projetées par la portion de coupure oblique 56 de la première zone de code 44 du réflecteur 42 forment un rectangle dont le grand bord est orienté de l'angle de 15° par rapport à la ligne horizontale de référence pour former le bord oblique 24 de la coupure 20.

Pour simplifier la description, la portion de coupure oblique 56 présente une section axiale de forme sensiblement parabolique. La portion de coupure oblique 56 est donc associée à des foyers optiques qui sont agencés au voisinage du point "F2" comme représenté à la figure 4.

Les foyers optiques "F2" de la portion de coupure oblique 56 de la première zone de code 44 du réflecteur 42 sont agencés longitudinalement à l'opposé de la deuxième source lumineuse de signalisation 50 par rapport à la première source lumineuse de code 48, de manière que la distance "D1" entre les foyers optiques "F2" de la portion de coupure oblique 56 et la première source lumineuse de code 48 soit inférieure à la distance "D2" entre les foyers optiques "F2" de la portion de coupure oblique 56 et la deuxième source de signalisation 50, et de manière que les deux sources lumineuses 48, 50 soient longitudinalement du même côté des foyers optiques "F2" de la portion de coupure oblique 56.

Plus particulièrement, les foyers optiques "F2" de la portion de coupure oblique 56 sont agencés longitudinalement en avant de la première source lumineuse de code 48 de manière que les rayons lumineux "R1" émis par la source lumineuse de code 48 soient réfléchis de manière divergente pour que les images 54 à l'infini de la première source lumineuse de code 48 par la portion de coupure oblique 56 soit projetées du même côté que le bord oblique 24 de la coupure 20 par rapport à un plan vertical axial passant par l'axe "R" de la route, comme représenté à la figure 5.

Les rayons lumineux "R1" émis par la première source lumineuse de code 48 sont ainsi réfléchis de manière légèrement divergente vers le bas-côté par rapport à la direction de l'axe optique "O" longitudinal en formant un angle "θ1" avec l'axe optique "O", comme illustré à la figure 4.

Les foyers optiques "F2" associés à la portion de coupure oblique 56 de la première zone de code 44 du réflecteur 42 sont décalés longitudinalement vers l'avant d'une distance "D1" plus grande que la distance "D2" entre les foyers optiques "F2" et la deuxième source lumineuse de signalisation 50. Ainsi lorsque la deuxième source lumineuse de signalisation 50 est allumée, les rayons lumineux "R2" émis par la deuxième source lumineuse de signalisation 50 sont réfléchis par la portion de coupure oblique 56 de la zone de code 44 de manière fortement divergentes par rapport à l'axe optique "O" en formant un angle "θ2" avec l'axe optique "O", comme illustré à la figure 6.

L'angle "θ2" est supérieur à l'angle "θ1". Ainsi, en comparant les figures 3 et 5, les images 60A, 60B, 60C, dont seulement trois sont représentées à titre non limitatif, de la deuxième source lumineuse de signalisation 50 par la portion de coupure oblique 56 sont sensiblement plus éloignées de l'axe "R" de la route en direction du bas-côté de la route que les images 38A, 38B, 38C de la deuxième source lumineuse 16 formées par un module optique 10 réalisé selon l'état de la technique. Ainsi, les images 60A, 60B, 60C sont dispersée et éloignées les unes des autres de manière à ne pas être superposées. L'ensemble ainsi formé par lesdites images 60A, 60B, 60C permet donc de produire une tâche lumineuse diffuse qui est étendue et éloignée de l'axe "R" de la route, et qui ne présente ainsi pas de points éclairés de façon très intense.

Cette configuration est donc très avantageuse lorsque, comme dans le cas de la présente invention, le deuxième faisceau doit être un faisceau de signalisation qui, selon les normes en vigueur, doit éclairer de manière très étalée horizontalement de part et d'autre de l'axe optique "O" longitudinal.

Au moins une partie des foyers optiques (non représentés) associés à la deuxième partie de la première zone de code 44 du réflecteur 42 sont agencés en arrière de la première source lumineuse de code 48 de manière à réfléchir les rayons lumineux émis par la première source lumineuse de code 48 de manière convergente. Ces foyers optiques sont plus particulièrement agencés entre la première source lumineuse de code 48 et la deuxième source lumineuse de signalisation 50.

La deuxième zone complémentaire 46 est conformée de manière à projeter des images de la deuxième source lumineuse de signalisation 50 en des points peu ou mal éclairés par les images de la deuxième source lumineuse de signalisation 50 projetées par la première zone de code 44.

La première zone de code 44 du réflecteur 42 permettant déjà d'éclairer de manière très étalée horizontalement, seuls quelques points doivent être éclairés, notamment dans l'axe. Ceci permet avantageusement de réaliser une deuxième zone complémentaire 46 de faible encombrement.

La deuxième zone complémentaire 46 est principalement agencée au-dessous de la première zone de code 44 du réflecteur 42.

Cependant, par exemple, si certains points spécifiques au deuxième faisceau lumineux de signalisation ne peuvent physiquement pas être éclairés par les surfaces élémentaires inférieures de la deuxième zone complémentaire 46 du réflecteur 42, la première zone de code 44 du réflecteur 42 est optimisée de manière à éclairer ces points. Ainsi, la première zone de code 44 est adaptée à la fois pour éclairer ces points spécifiques au deuxième faisceau lumineux de signalisation et pour former de manière réglementaire le premier faisceau lumineux 18 de code.

A cet effet, la première zone de code 44 comporte au moins une surface élémentaire supérieure 62 de manière à réfléchir les rayons lumineux "R2" émis par la deuxième source lumineuse de signalisation 50 pour compléter le faisceau lumineux de signalisation, comme représenté à la figure 7.

Cette surface élémentaire supérieure 62 de la zone de code 44 est conformée de manière que les images de la première source lumineuse de code 48 par ladite surface élémentaire supérieure 62 s'intègrent au premier faisceau de code 18 sans dépasser les intensités permises par les normes en vigueur.

Selon une variante non représentée de l'invention, les zones de code 44 et complémentaire 46 comportent des stries qui permettent l'étalement de la lumière selon des directions déterminées, par exemple horizontalement, afin d'obtenir un faisceau lumineux plus étalé selon la direction déterminée.

Dans le mode de réalisation représenté aux figures 4 à 7, la première zone de code 44 et la deuxième zone complémentaire 46 du réflecteur 42 sont formées en une seule pièce venue de matière.

Selon une variante non représentée de l'invention, la première zone de code 44 est réalisée en une pièce distincte de la deuxième zone complémentaire 46.

Selon une variante non représentée de l'invention, le module optique comporte une troisième source lumineuse qui est agencée dans la zone complémentaire et qui est susceptible d'émettre des rayons lumineux qui, une fois réfléchis par la zone de code et par la zone complémentaire, forment un troisième faisceau lumineux d'éclairage, remplissant par exemple une fonction de feu de route.

L'invention a été décrite pour un deuxième faisceau lumineux de signalisation ayant une fonction de feux diurnes ou DRL, cependant, l'invention est aussi applicable à d'autres types de faisceaux de signalisation.

L'invention couvre aussi un module optique 40 tel que décrit précédemment et qui comporte des moyens pour produire un ou plusieurs autres faisceaux lumineux en plus du faisceau de code 18 et dudit faisceau de signalisation.

Par exemple, le module optique 40 est susceptible de comporter des moyens pour émettre un troisième faisceau lumineux de signalisation qui est produit en association avec la première zone de code 44 et la zone complémentaire 46 comme décrit précédemment. Le réflecteur 42 peut aussi comporter d'autres zones complémentaires (non représentées).

## Revendications

1. Module optique (40) pour projecteur de véhicule susceptible d'émettre vers l'avant, selon une direction globale d'un axe optique (O) longitudinal, au moins un premier faisceau lumineux à coupure (20) à bord oblique (24), notamment de type code, et un deuxième faisceau lumineux différent, ledit module optique (40) comportant :
- un réflecteur (42) comportant au moins une première zone dite de code (44) et au moins une deuxième zone complémentaire (46), la première zone dite de code (44) comportant au moins une portion dite « de coupure oblique » (56) pour créer le bord oblique (24) de la coupure (20) ;
- une première source lumineuse de code (48) susceptible d'émettre des rayons lumineux (R1) qui, une fois réfléchis par la première zone de code (44) du réflecteur (42), forment le premier faisceau lumineux (18) à coupure de type code ;
- et une deuxième source lumineuse (50) susceptible d'émettre des rayons lumineux (R2) qui, une fois réfléchis par la première zone de code (44) et par la deuxième zone complémentaire (46) du réflecteur (42), forment le deuxième faisceau lumineux ;
**caractérisé en ce que :**
- le faisceau lumineux du deuxième type est un faisceau lumineux de signalisation ; et **en ce que**
- au moins une portion dite « de coupure oblique » (56) de la zone dite de code (44) est agencée du même côté que le bord oblique (24) de la coupure (20) par rapport à un plan axial vertical.

2. Module optique (40) selon la revendication précédente, **caractérisé en ce que** la portion de coupure oblique (56) de la première zone de code (44) comporte une partie médiane (58) qui fait un angle (α) identique à celui du bord oblique (24) par rapport à une ligne transversale (H).

3. Module optique (40) selon l'une quelconque des revendications précédentes, **caractérisé en ce que** la zone de code (44) comprend des portions (62) adaptées aussi pour éclairer des points/zones spécifiques au deuxième faisceau lumineux de signalisation.

4. Module optique (40) selon l'une quelconque des revendications précédentes, **caractérisé en ce que** la première source lumineuse de code (48) comporte une coupelle (52) qui est agencée de manière à ce que les rayons lumineux (R1) émis par la première source lumineuse de code (48) n'atteignent essentiellement que la zone de code (44) du réflecteur (42).

5. Module optique (40) selon l'une quelconque des revendications précédentes, **caractérisé en ce que** le deuxième faisceau lumineux est un faisceau lumineux diurne.

6. Module optique (40) selon l'une quelconque des revendications précédentes, **caractérisé en ce qu'**il comporte une troisième source lumineuse agencée dans la zone complémentaire (46) et qui est susceptible d'émettre des rayons lumineux qui, une fois réfléchis par la zone de code (44) et/ou par la zone complémentaire (46), forment un troisième faisceau lumineux d'éclairage, notamment de type sans coupure.

7. Module optique (40) selon la revendication précédente, **caractérisé en ce que** le troisième faisceau est un faisceau de route.

8. Module optique (40) selon l'une quelconque des revendications précédentes, **caractérisé en ce que** la deuxième source lumineuse (50) est décalée, notamment sensiblement longitudinalement vers l'arrière, par rapport à la première source lumineuse (48).

9. Projecteur de véhicule automobile comportant le module optique (40) réalisé selon l'une quelconque des revendications précédentes.

10. Véhicule automobile, **caractérisé en ce qu'**il comprend au moins un projecteur selon la revendication précédente.

## Claims

1. Optical module (40) for a vehicle headlight which can emit forwards, according to a global direction of a longitudinal optical axis (O), at least one first cut-off light beam (20) with an oblique edge (24), in particular of the dipped type, and a second, different light beam, the said optical module (40) comprising:
- a reflector (42) comprising at least one first, so-called dipped area (44), and at least one complementary second area (46), the first, so-called dipped area (44) comprising at least one so-called "oblique cut-off' portion (56) in order to create the oblique edge (24) of the cut-off (20);
- a first dipped source of light (48) which can emit rays of light (R1) which, once they are reflected by the first dipped area (44) of the reflector (42), form the first cut-off light beam (18) of the dipped type; and
- a second source of light (50) which cam emit rays of light (R2) which, once they are reflected by the first dipped area (44) and by the second complementary area (46) of the reflector (42), form the second light beam,
**characterised in that:**
- the light beam of the second type is a signalling light beam; and **in that**
- at least one so-called "oblique cut-off' portion (56) of the said dipped area (44) is arranged on the same side as the oblique edge (24) of the cut-off (20), relative to a vertical axial plane.

2. Optical module (40) according to the preceding claim, **characterised in that** the oblique cut-off portion (56) of the first dipped area (44) comprises a median part (58) which forms an angle (α) which is identical to that of the oblique edge (24), relative to a transverse line (H).

3. Optical module (40) according to either of the preceding claims, **characterised in that** the dipped area (44) comprises portions (62) which are also designed to light specific points/areas of the second, signalling light beam.

4. Optical module (40) according to any one of the preceding claims, **characterised in that** the first, dipped source of light (48) comprises a cup (52) which is arranged such that the rays of light (R1) which are emitted by the first, dipped source of light (48) reach substantially only the dipped area (44) of the reflector (42).

5. Optical module (40) according to any one of the preceding claims, **characterised in that** the second light beam is a daytime light beam.

6. Optical module (40) according to any one of the preceding claims, **characterised in that** it comprises a third source of light which is arranged in the complementary area (46), and can emit rays of light which, when they are reflected by the dipped area (44) and/or by the complementary area (46), form a third lighting beam, in particular of the type without cut-off.

7. Optical module (40) according to the preceding claim, **characterised in that** the third beam is a full beam.

8. Optical module (40) according to any one of the preceding claims, **characterised in that** the second source of light (50) is offset, in particularly substantially longitudinally, towards the rear, relative to the first source of light (48).

9. Motor vehicle headlight comprising the optical module (40) produced according to any one of the preceding claims.

10. Motor vehicle, **characterised in that** it comprises at least one headlight according to the preceding claim.

## Patentansprüche

1. Optikmodul (40) für Kraftfahrzeugscheinwerfer, das allgemein in einer Richtung einer optischen Längsachse (O) wenigstens ein erstes Lichtbündel mit Hell-Dunkel-Grenze (20) mit schrägem Rand (24), insbesondere vom Typ Abblendlicht, und ein zweites, andersartiges Lichtbündel nach vorne auszusenden vermag, wobei das Optikmodul (40) umfasst:
- einen Reflektor (42) mit wenigstens einem ersten sogenannten Abblendlichtbereich (44) und wenigstens einem zweiten komplementären Bereich (46), wobei der erste Abblendlichtbereich (44) wenigstens einen Abschnitt mit sogenannter "schräger Hell-Dunkel-Grenze" (56) aufweist, um den schrägen Rand (24) der Hell-Dunkel-Grenze (20) zu bilden;
- eine erste Abblendlichtquelle (48), die Lichtstrahlen (R1) auszusenden vermag, die nach Reflexion durch den ersten Abblendlichtbereich (44) des Reflektors (42) das erste Lichtbündel (18) mit Hell-Dunkel-Grenze vom Typ Abblendlicht bilden;
- und eine zweite Lichtquelle (50), die Lichtstrahlen (R2) auszusenden vermag, die nach Reflexion durch den ersten Abblendlichtbereich (44) und den zweiten komplementären Bereich (46) des Reflektors (42) das zweite Lichtbündel bilden;
**dadurch gekennzeichnet, dass:**
- das Lichtbündel des zweiten Typs ein Signallichtbündel ist; und dass
- wenigstens ein Abschnitt mit sogenannter "schräger Hell-Dunkel-Grenze" (56) des sogenannten Abblendlichtbereichs (44) auf der gleichen Seite angeordnet ist wie der bezüglich einer axialen Vertikalebene schräge Rand (24) der Hell-Dunkel-Grenze (20).

2. Optikmodul (40) nach dem vorhergehenden Anspruch,
**dadurch gekennzeichnet, dass** der Abschnitt mit schräger Hell-Dunkel-Grenze (56) des ersten Abblendlichtbereichs (44) einen mittleren Teil (58) aufweist, der einen Winkel (α) bildet, der mit dem des bezüglich einer Querlinie (H) schrägen Rands (24) identisch ist.

3. Optikmodul (40) nach einem der vorhergehenden Ansprüche,
**dadurch gekennzeichnet, dass** der Abblendlichtbereich (44) Abschnitte (62) aufweist, die auch zum Beleuchten von Punkten/Bereichen geeignet sind, die für das zweite Signallichtbündel spezifisch sind.

4. Optikmodul (40) nach einem der vorhergehenden Ansprüche,
**dadurch gekennzeichnet, dass** die erste Abblendlichtquelle (48) eine Blendwanne (52) aufweist, die so angeordnet ist, dass die von der ersten Abblendlichtquelle (48) ausgesandten Lichtstrahlen im Wesentlichen nur zum Abblendlichtbereich (44) des Reflektors (42) gelangen.

5. Optikmodul (40) nach einem der vorhergehenden Ansprüche,
**dadurch gekennzeichnet, dass** das zweite Lichtbündel ein Tagfahrlicht ist.

6. Optikmodul (40) nach einem der vorhergehenden Ansprüche,
**dadurch gekennzeichnet, dass** es eine dritte Lichtquelle umfasst, die in dem komplementären Bereich (46) angeordnet ist und die Lichtstrahlen auszusenden vermag, die nach Reflexion durch den Abblendlichtbereich (44) und/oder den komplementären Bereich (46) ein drittes Beleuchtungslichtbündel, insbesondere ohne Hell-Dunkel-Grenze, bilden.

7. Optikmodul (40) nach dem vorhergehenden Anspruch,
**dadurch gekennzeichnet, dass** das dritte Lichtbündel ein Fernlicht ist.

8. Optikmodul (40) nach einem der vorhergehenden Ansprüche,
**dadurch gekennzeichnet, dass** die zweite Lichtquelle (50) bezüglich der ersten Lichtquelle (48) insbesondere im Wesentlichen in Längsrichtung nach hinten versetzt ist.

9. Kraftfahrzeugscheinwerfer mit dem nach einem der vorhergehenden Ansprüche ausgeführten Optikmodul (40).

10. Kraftfahrzeug,
**dadurch gekennzeichnet, dass** es wenigstens einen Scheinwerfer nach dem vorhergehenden Anspruch umfasst.
